# EUROPEAN PATENT SPECIFICATION

(11) **EP 1 803 007 B1**
(45) Date of publication and mention of the grant of the patent: **23.01.2013**
(21) Application number: 05777231.1
(22) Date of filing: 05.09.2005
(51) Int. Cl.: G02B 6/10, G02F 1/355

(54) **POLING OF OPTICAL FIBRES AND THE LIKE**
POLUNG VON OPTISCHEN FASERN UND DERGLEICHEN
POLARISATION DE FIBRES OPTIQUES ET ANALOGUES

(30) Priority: 03.09.2004 SE 0402136
(43) Date of publication of application: 04.07.2007
(73) Proprietor: Acreo Swedish ICT AB, 164 40 Kista (SE)
(72) Inventor: MARGULIS, Walter, S-141 60 Huddinge (SE); MYREN, Niklas, S-113 42 Stockholm (SE)
(74) Representative: Haag, Malina Anna
(86) International application number: PCT/SE2005/001282
(87) International publication number: WO 2006/025792

(56) References cited:
- WO-A1-03/005080
- WO-A1-03/005080
- US-A- 5 966 233
- US-A1- 2001 047 669
- US-A1- 2002 076 155
- US-B1- 6 259 830
- US-B1- 6 259 830
- US-B1- 6 522 794
- ENAMI Y ET AL: "POLING OF SODA-LIME GLASS FOR HYBRID GLASS/POLYMER ELECTRO-OPTIC MODULATORS", APPLIED PHYSICS LETTERS, AIP, AMERICAN INSTITUTE OF PHYSICS, MELVILLE, NY, US, vol. 76, no. 9, 28 February 2000 (2000-02-28), pages 1086-1088, XP000934732, ISSN: 0003-6951, DOI: 10.1063/1.125947
- PAUL BLAZKIEWICZ ET AL: "Modification of Thermal Poling Evolution Using Novel Twin-Hole Fibers", JOURNAL OF LIGHTWAVE TECHNOLOGY, IEEE SERVICE CENTER, NEW YORK, NY, US, vol. 19, no. 8, 1 August 2001 (2001-08-01) , XP011029997, ISSN: 0733-8724

## Description

### Technical field

The present invention generally relates to the field of permanently inducing an electric field in amorphous materials such as glass, known in the art as "poling".

### Background

Poling involves exposing a material to an intense electric field, usually whilst the material is either subjected to a heating process or a UV irradiation. For optically transmissive materials, the poling process may effect a change in the optical second-order non-linearity.

Poling can for example be used for inducing or recording a permanent electric field in an optical fiber, such that it becomes electro-optically active. This type of electro-optical fibers are then capable of changing more efficiently its refractive index in response to an applied electrical signal, such that it can be used for purposes of switching or modulating light.

Poling of an optical fiber is e.g. described in WO 03/005080. Typically, the optical fiber to be poled comprises a silica cladding, a fiber core and two electrodes. The electrodes are arranged in the cladding of the fiber, in parallel with and on opposite sides of the fiber core. A poling voltage across the electrodes generates an electric field for poling the core. Further, the electrodes are preferably arranged close to the fiber core in order to maximize the field strength over the core during poling.

The recorded (permanently "frozen" into the material) electric field should be as high as possible to create an effective device, e.g. a device which requires a low modulation voltage. Therefore, in order to make efficient components, one attempts to apply as high a voltage as possible during poling, while staying on the safe side of the dielectric breakdown limit. In other words, the strength of the applied electric field during poling is limited by the electric breakdown properties of the material, which hence results in a lower practical limit for the required modulation voltage when the device is used as an active electro-optic component after poling. Electric breakdown through the surrounding air may also be a problem.

Another limitation exists in glass fibers, arising from the fact that the distance between electrodes is small (typically 25 microns or less). The charge distribution resulting after poling is essentially adjacent to the anode electrode, which effectively expels the neighboring cations from a region that becomes depleted (depletion region). In thick samples, i.e., in samples for which the separation between electrodes is large, most of the field recorded is confined within the depletion region. In thin samples, however, the fraction (F) of the field outside the depletion region is significant. The resulting field after poling can be even greater outside the depletion region than inside it, if the depletion region is wider than half the separation between electrodes. Therefore, whatever the location of the core is in relation to the depletion region, much of the recorded field has no effect on the core, and therefore the device becomes very inefficient.

Enami. Y. et. al "Poling of soda-lime glass for hybrid glass/polymer electro-optic modulators" Appl. Phys. Lett., vol. 76, no. 9, pp. 1086-1088 (2000) discloses a poling process of soda-lime glasses enabling in-plane poling of electro-optic polymers coated on ion-exchanged channel waveguides fabricated in soda-lime glass for hybrid modulators. Poling is performed by applying a positive voltage on two in-plane electrodes (anodes) with a third backside electrode (cathode) connected to ground.

### Summary of the invention

It is an object of the present invention to provide an improved way of poling a dielectric material such as glass.

When an electric field is applied between two electrodes in a dielectric material, a displacement from the anode to the cathode of positive ions result in the depletion of positively charged ions on the anode side. In the case of glass it is believed that migration of sodium ions is one predominant effect in this process. For sufficiently long poling times, most remaining negative ions are neutralized with the exception of those at the edge of this depletion region. When the fiber is cooled to room temperature (keeping the high voltage used during poling still applied), the charge distribution becomes frozen into the material, creating a residual electric field in the glass. The frozen charges that create the field are negative, and are mainly located in a thin layer at the edge of the depleted region.

The inventors have now found that it is possible to achieve poling of a dielectric material using only one electrode, contained inside the material, and applying a positive potential to this electrode. This might at first seem counter-intuitive, a permanent electric field being induced in the material without the use of both a positive and a negative electrode.

Computer simulations have been carried out explaining the phenomenon under the assumption that the environment surrounding the material, typically air, contributes to create a ground potential around the material. In other words, the desired field is created between the outer "grounded" material surface and the poling electrode inside the material. The same effect has been observed even when the material is insulated by the presence of a plastic coating. As an example, an optical fiber carrying an acrylate coating has been successfully poled by the inventive method using only one single metallic electrode.

Yet the more counter-intuitive it may seem, the inventors have found that two electrodes carrying a respective potential of the same sign may be employed without the poling action being cancelled. Rather, an induced electric field may be recorded, which is nearly twice as strong compared to conventional poling with one anode and one cathode.

Therefore, the inventive method is preferably performed using two electrodes, which extend longitudinally inside an optical fiber with a bias potential of the same polarity (and preferably of substantially the same magnitude) during poling, thus facilitating the recording of a much higher field than if the electrodes had a bias potential of opposite polarity during poling. Further, for a typical fiber geometry, the use of bias potentials of same polarity (and preferably substantially the same magnitude) during poling, enables the application of a much higher bias potential with a minimized risk of dielectric breakdown. In addition, the same two electrodes are conveniently used, after poling, for controlling an optical signal propagating in the fiber, by the application of a control signal across the two electrodes in a conventional way.

By using two anode electrodes biased to essentially the same potential, it has been found possible to displace twice as much charge compared to when using a single anode electrode, since the outer surface of the fiber behaves as a ground electrode at zero potential. In this two-anode configuration, although the core of the fiber still does not experience the effect of more than a fraction (F) of the field created by the first anode, it does experience the same fraction (F) of the field created by the second anode. The two fields created add. Therefore, the resulting recorded field experienced by the core is larger in the two-anode configuration than in the conventional configuration.

The present invention thus provides a method of inducing a permanent electric field in a dielectric material, in which ions or dipoles may be rearranged under the influence of an applied electric field. In a preferred embodiment, the core region of an optical fiber is subjected to the poling process, wherein each electrode may be located within the cladding of the fiber.

The inventive method provides a number of advantages with respect to known poling techniques. First of all, the use of two anodes disposed on opposite sides of the fiber core allows recording an electric field that is much larger than if the electrodes were used in the conventional way, i.e., one as anode and the other one as cathode. Further, as there is two anodes and no real cathode i.e. substantially zero or only a comparatively small potential difference between the two electrodes, the risk of dielectric breakdown during poling is very much reduced. Therefore a much higher poling potential can be used. In addition, in conventional poling using one anode and one cathode, care must be taken such that the electrodes are always separated by at least a few centimeters outside the material in order to avoid breakdown through air during poling. This contact separation complicates the handling of the poling and makes it difficult to make good high frequency connections to the device for high frequency modulation after poling. Poling without the use of a "standard" electric field eliminates these problems, as it only involves handling two anodes with essentially the same potential.

Below are listed a number of advantages related to different embodiments of the invention. Common for all of these are that the methods described provide an effective way of poling a dielectric material.

In one embodiment, two or more electrodes are used, to which substantially equally large potentials of the same sign (polarity) are applied. The use two electrodes applied to essentially the same potential results in one charge distribution being induced near each electrode, and their effects are superimposed. The resulting electric field after poling may thereby be essentially doubled. Further, as the potentials are preferably of equal sign and magnitude, there is essentially no potential difference between the electrodes, and advantageously a negligible risk of dielectric breakdown. Consequently, much higher potentials can be used when poling the material.

It is particularly preferred to employ the inventive method for poling optical fibers, wherein the electrodes may be located within the cladding of the fiber close to the fiber core.

Further, by arranging the two anodes sufficiently close to each other, the induced electric fields at each anode can be made to overlap. Thereby, a nearly twice as strong electric field may be induced in the material between the electrodes, compared to when only one electrode is used and applied to the same potential for the same amount of time. The combination of being able to apply much higher electric field during poling and to record a field nearly twice as large compared to the conventional anode/cathode configuration is of course highly useful. There are a number of ways in which this can be taken advantage of. For example, the inventors have been able to record a field across the core of a fiber that caused the same effect as a potential difference of 8 kV applied between anode/cathode electrodes of the conventional technique, although the technique used for this achievement was the application during poling of a bias potential of +4.3 kV to both metallic electrodes. The same type of fiber was found not to withhold a potential difference between electrodes greater than 5 kV, since electrical breakdown occurred at this potential difference level. Therefore, with the inventive technique, it was possible to record a field across the core of the fiber that exceeded the maximum field that can be applied with external electrodes biased in the conventional way. Further, a similar piece of fiber was poled biasing both electrodes at +7.6 kV and no electrical breakdown was observed. The time needed for poling to be satisfactorily effected was then reduced.

Preferably, the potential applied to respective electrode is positive, such that an effective poling of a glassy material, e.g. fused silica can be achieved.

As mentioned above, the dielectric material may advantageously be a core and/or a cladding of an optical fiber, which is provided with two electrodes arranged substantially in parallel with the core of the fiber, suitably within the cladding. An equal positive potential is applied to both electrodes, which are arranged on opposite sides of the fiber core and sufficiently close to each other, such that the effect of the induced electric field will strongly overlap each other.

If the poling is performed correctly, this will produce a permanent electric field in the core which is nearly twice as high as the one which would have been achieved by the use of only one anode applied to the same potential, or one anode and one grounded cathode with the same potential difference, and poled for the same amount of time.

In a preferred embodiment, the core of the fiber is arranged closer to one of the two electrodes. This facilitates the induced field distribution. In order for the fiber to work efficiently it is preferred that the entire fiber core is located inside the depleted region around one of the anodes. In other words, the border of the depleted region, should preferably not pass through the core of the fiber.

More than two internal electrodes can also be used when poling the dielectric material. This can advantageously create an even stronger induced electric field compared to poling using two anodes applied to the same potential, since even more charge can be displaced.

Generally, one or more of the electrodes can have a substantially non-elliptical and non-circular cross section in order to create an optimal induced electric field by gathering adjacent to the core of the fiber the negative charge at the edge of the depletion region that remains after poling.

The poling of the material can be performed under a controlled atmosphere. For example, by providing an increased air humidity, the surrounding air may act more efficiently to ground the outside surface of the dielectric material.

In a comparative embodiment, an electrode formed around the outer surface of a fiber is applied to a negative potential. Air or a plasma, supplying an excess of charges, present in one or several longitudinal holes inside the fiber electrically grounds the inner surface of said hole, thus acting as an anode for poling. This enables the poling of a fiber without using internal electrodes. The air or plasma in the holes may also be replaced by a liquid or gas, which facilitates the use of the surface of the hole as anode electrode. Advantageously, manufacture of such a fiber will be most cost effective.

Moreover, the present invention can be used for poling a twin-core fiber. The poling is then effected such that each of the cores will experience a different sign of the inscribed electric field, such that a push-pull configuration is obtained when the device is later driven in operation.

### Brief description of the drawings

The features and advantages of the present invention will be more readily understood from the following detailed description, wherein reference is made to the accompanying drawings.

Figure 1 illustrates a cross section of a twin hole optical fiber, provided with two longitudinal electrodes.

Figure 2 illustrates the result of a measurement performed on the fiber, after the fiber had been poled using two anodes at equal potential.

Figure 3 schematically shows two depleted areas after poling has been performed using two anodes at equal potential.

Figure 4 schematically illustrates different configurations of the longitudinal electrodes.

Figure 5 schematically illustrates a fiber, comprising two cores, which has been poled using two anodes at equal potential.

### Detailed description of preferred embodiments

Although the invention is described mainly in relation to optical fibers, it is understood that it can be applied to any dielectric material, wherein an permanent electric field can be induced by the use of an applied potential. This includes for example optical fibers based on other than silica-based glasses, polymer fibers, planar waveguides and glass-ceramic structures.

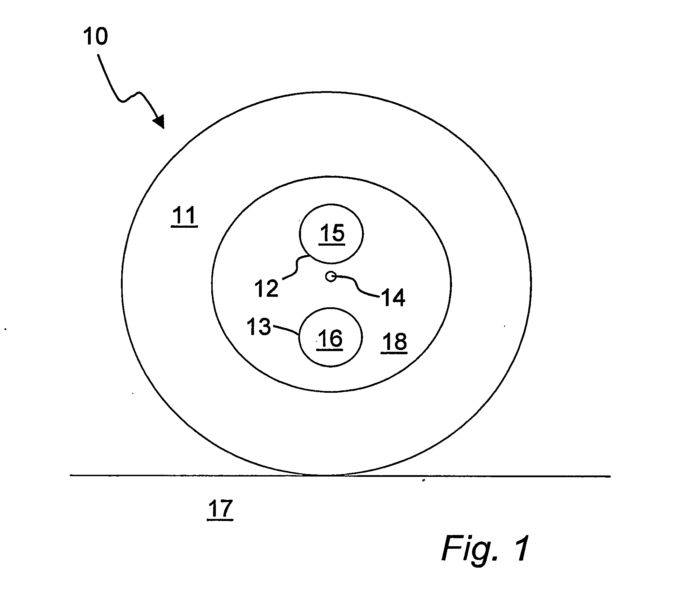

The fiber used in the experiments was specially designed for poling. The preform was manufactured from a 8 mm thick glass tube of fused silica glass with nominally about 1 ppm of sodium. The core was created by depositing germanium on the inside of the tube using a Modified Chemical Vapor Deposition process, after which the preform was collapsed and holes drilled. Finally, the preform was drawn to a fiber with an outer diameter of 125 µm. A high temperature acrylate, or in some cases a polyimide, coating 11 was applied to make the fiber heat resistant during electrode insertion and poling, and to keep it transparent after the thermal treatments. As shown in figure 1, the fiber 10 was designed to have one of the electrode holes 12 placed closer to the core 14 to ensure good overlap between the core and the poled region. In order to minimize the optical loss caused by the presence of the electrodes 15,16, the core was highly doped with Ge, to give a refractive index step Δn = 0.025 and N.A. = 0.27, which confines the optical mode mainly to the core. As will be appreciated, the presence of metallic electrodes close to the core may lead to optical losses unless the propagating mode in the fiber is confined close to the core, substantially non-overlapping with the electrodes. The diameter of the core was 3.6 µm and the fiber was a single-mode fiber for 1550 nm. The edge-to-edge distance from the core 14 to the nearest hole 12 was 4.6 µm, and to the farthest hole 13 10.1 µm. The two holes 12, 13 were 29.5 µm in diameter and had a separation of 18.3 µm.

In general, when poling an optical fiber using the inventive method, the diameter of the fiber should preferably be a few times larger than the separation between the electrodes. Typically, the diameter of the fiber may be 4-10 times larger than the separation between the electrodes, such as about 6 times larger.

The alloy used to create the electrodes 15, 16 consisted of 80 % wt Au and 20 % wt Sn, with a melting point of 280 °C and resistivity 1.6 x 10⁻⁵ Ω cm. This alloy was chosen because it can be inserted at 300 °C in molten form and poling can take place with the metal in its solid phase at a temperature of 250-270 °C, which is close to the optimal temperature for poling. Generally, when performing the method disclosed and claimed herein, the temperature of the material should typically be at least 200°C, and preferably at least 250°C. The length of the electrodes 15, 16 was 37 cm,. Electric contact with the electrodes was established by side-polishing the fiber and then attaching 20 µm thick gold coated tungsten wires to the alloy using conductive epoxy.

A hotplate 17 was used to heat the contacted fiber to 255 °C. The fiber was poled by applying a voltage of +4.3 kV to both the electrodes 15, 16. After 155 minutes the heater was switched off and the fiber 10 was allowed to cool down to room temperature with the voltage still applied. All fibers were poled with the high-temperature resistant primary coating 11 in place and unharmed.

As alternatives to using a hotplate for heating the material to be poled, it is also possible to use a furnace or UV-exposure. In all circumstances, however, there should be an environment surrounding the material to be poled that contain charge carriers, such that an external ground potential is created. The heated environment around the optical fiber provides for a supply of negative charges, and this is greatly facilitated if the surface of the furnace or hot-plate is sufficiently conductive at the poling temperature. A metal surface and a soft glass (soda-lime) surface have both been successfully used as the external ground plane (ground potential) delivering the negative charges.

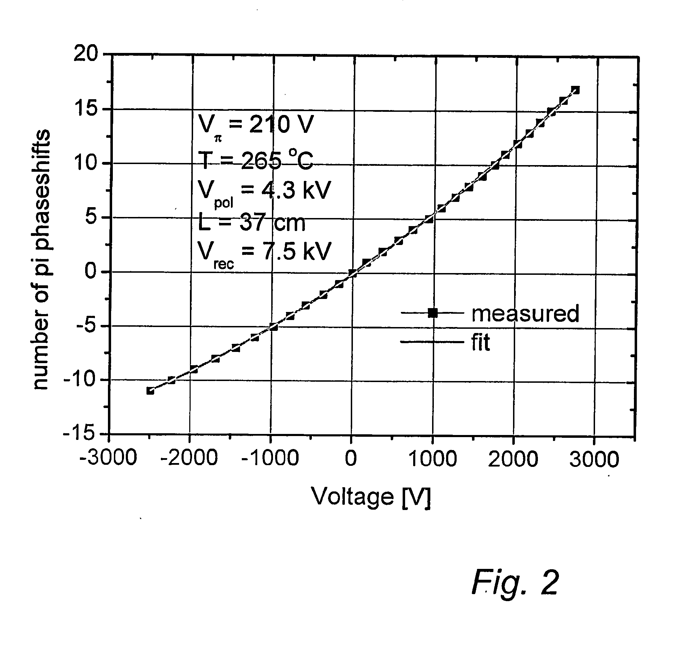

In order to characterize the effect of poling, the fiber component was used as the active arm of a ∼1 m long, unstabilized 2x2 Mach-Zehnder interferometer (MZI). The test result is illustrated in Figure 2. The characterization was carried out at 1550 nm, where the fibers used were single mode. For all experiments a tunable laser amplified by an Erbium-Doped Fiber Amplifier (EDFA) was used as a light source. The MZI consisted of two 3-dB couplers with a standard single-mode fiber as the passive arm. To measure the field recorded after poling, the fiber 10 was probed with a 400 V AC peak-to-peak voltage at 1 kHz, which was applied across the two electrodes 15, 16 previously used for poling. The peak-to-peak intensity modulation resulting from the AC voltage was recorded for different applied DC voltages. By slightly adjusting the wavelength of the laser, the interferometer was placed in quadrature before each measurement. Minimum modulation of the optical signal is achieved when the external DC bias cancels the recorded field. In this case, the external voltage was measured to be -7.5 kV, and thus the recorded voltage Vrec = +7.5 kV.

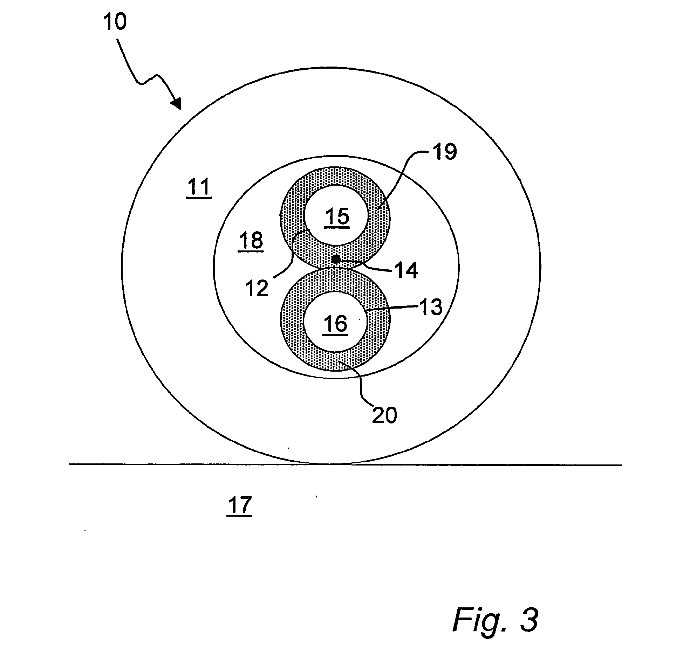

The spatial distribution of the effective nonlinearity recorded was studied in order to evaluate the poling procedure. To this end, the acrylate coating 11 was removed and the fiber was cleaved several times in the - 20 cm long poled region. In order to reveal the recorded electric field the cleaved ends of the fiber pieces were etched in 40 % hydrofluoric acid (HF) for 45 seconds. The fiber pieces were then rinsed in deionized water and dried at 150 °C in air, after which the samples were inspected with an optical phase contrast microscope. Etching revealed, as is schematically illustrated in Figure 3, that two depletion regions 19, 20 had been created, one around each electrode, the cross section of which were substantially circular.

As mentioned above, poling with two anodes having the same potential, rather than two electrodes with opposite potentials, might at first seem contrary to common sense. Without being bound to any particular theoretical explanation, the following is believed to be the physics behind these remarkable results. When a fiber having an acrylate coating 10 is poled using two internal anodes 15, 16 of similar positive polarity at high temperature, an accumulation of negative charges occurs on the outer surface of the fiber. This effect might be due to negative charge carriers that permeate through the coating, or due to dipoles which are rearranged inside the coating. The applied positive potential and the accumulation of negative charges forces cations present in the glass to move from the anodes 15, 16 outwardly, towards the negative charges surrounding the cladding 18 such that the area 19, 20 immediately surrounding the anodes are depleted of cations, having a high mobility. These depleted regions are soon to a large extent neutralized, either by H⁺ or H₃O⁺ entering the region, or by electrons from the depleted areas ionized by the large field and entering the anodes. Left is only a thin layer of negative charges at the border between the depleted regions 19, 20 and the not yet depleted region. This border is typically 0.5 µm thick.

When the cladding 18 is made of fused silica, mainly Na-ions are displaced. Other ions which also have a relatively high mobility in glass are e.g. K⁺, H⁺, H₃O⁺, Li⁺ and Ag⁺. The induced permanent electric field should be time stable, i.e. should not change substantially over time. Therefore, it might be advantageous to displace ions having a slightly lower mobility, such as K⁺ or Ca²⁺, as this could create a more time stable induced electric field. As poling with two anodes facilitates the use of a higher electric field, this might enable a migration of K or Ca ions. However, the effect noted to date is mainly attributed to the migration of sodium ions and their replacement by hydronium species (H⁺ and H₃O⁺).

Although cations are the most mobile charge carriers in many types of glass, this is not always true. In e.g. lead based glass, electrons are the most mobile ones. Hence it is possible to pole a lead based glass using one or several cathodes and no anode, similarly to poling fused silica with two anodes, the outer surface of the fiber providing for the missing, complementary electrode.

As an example, when a fiber with two longitudinal electrodes arranged 18 µm apart and given an electrical potential of 3 kV is poled at 260°C for 8 minutes, a depletion region of width 9 µm may be formed around each electrode. In other words, the two depleted regions 19, 20 will overlap between the electrodes and the negative ions at the border of each depleted region will be accumulated in roughly the same area. Consequently, nearly twice as much charge will accumulate between the electrodes, which means that the permanent electric field induced on either side of the negative charge distribution in the fiber will be nearly twice as large.

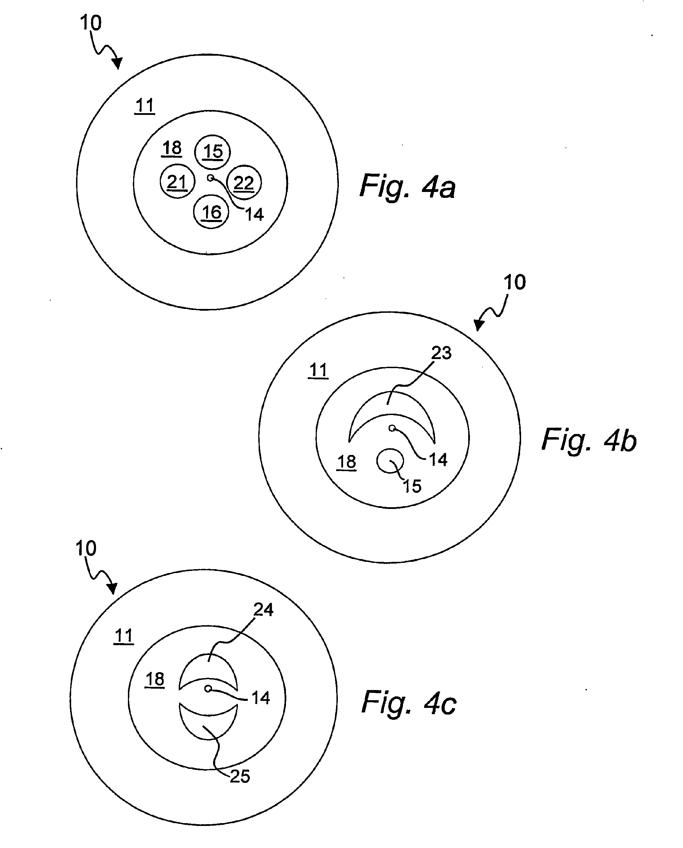

Instead of using two electrodes of a circular cross section, a number of other arrangements are possible. One example is four symmetrically distributed electrodes 15, 16, 21, 22 as shown in Figure 4a. Another example is the arrangement of one or several electrodes with a different shape, e.g. a non-circular cross section. Figure 4b and 4c shows one and two electrodes 23; 24, 25, respectively, having a crescent shape, with the concave side facing the core or the center of the fiber.

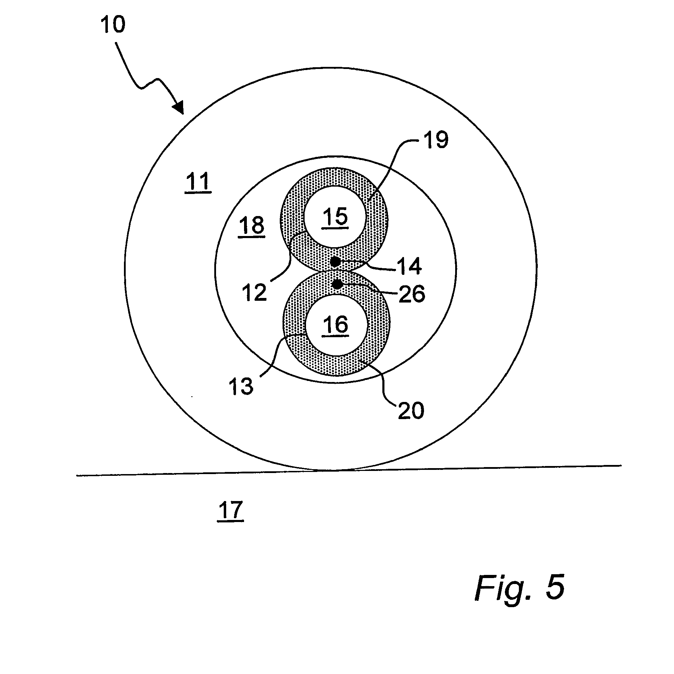

By arranging two cores 14, 26 in the fiber 10, as illustrated in Figure 5, and poling the fiber with e.g. two positive anodes 15, 16, the fiber can be used as a complete Mach-Zehnder (MZ) interferometer. Creating a MZ interferometer in one piece is advantageous as it reduces the number of splices needed, guarantees that the two fiber cores have the same optical behavior, gives a large bandwidth and is easy to manufacture. This type of interferometer can be switched with a frequency of at least 100 MHZ. Further, by applying an electric field over the electrodes in the fiber, a "push-pull configuration" can be achieved. In other words the refractive index in one of the cores is raised, and at the same time the refractive index of the other core is lowered, by the application of an electric field across the electrodes.

Another way of poling a twin-hole optical fiber, which is provided with air, a plasma or some other gas instead of electrodes inside the longitudinally extending holes, is to arrange an electrode on the outside of the fiber, e.g. by applying a metal layer thereto. The electrode is applied to a negative potential, and that together with positive charges from the medium provided in the longitudinal holes may create an electric field across the fiber, such that poling is effected. This type of fiber is cost effective to manufacture.

This type of fiber can be used for frequency doubling, if the correct periodicity or refractive index is provided with the help of e.g. UV-light. Naturally, also fibers poled by two anodes can be used for frequency doubling, since the poling in general activates a second order optical non-linearity in the fiber. As will be described below, it may be useful to remove the electrodes after the poling has been performed.

In applications of poled fibers for the control of laser radiation, for instance in the form of an intra-cavity element in a fiber laser for Q-switching or mode-locking, it is often advantageous to have control of the polarization of the light. Polarization maintaining fibers are sometimes used to guarantee that the degree of polarization of the laser light is high, and a single or "clean" state of polarization is maintained in the cavity. In such a case and in other cases, it may be valuable to have the poled fiber fabricated from a polarization maintaining fiber. One possible configuration to be used for this purpose could involve a fiber having for example four holes disposed around the core, essentially at mutual circumferential angles of 90 degrees, wherein one pair of holes, preferably on opposite sides of the core, is used for accommodating stress elements, and wherein another pair of holes are used for accommodating the electrodes used for the poling process (and optionally also for controlling the device after poling).

The present invention is also suitable for the fabrication of poled twin-core fibers. A poled fiber can be regarded as essentially constituting a phase modulator, wherein the voltage applied across the poled region (e.g. a core) is used for controlling the refractive index. In order to obtain amplitude modulation and switching, an interferometer may be employed (e.g. of Michelson, Sagnac or Mach-Zehnder configuration using a poled fiber). Consider now an example where use is made of an interferometer of Mach-Zehnder configuration. Such interferometer should comprise a pair of optical couplers (e.g. a pair of 3 dB fiber couplers), coupled to each other through an active fiber (active arm) and a passive fiber (reference arm). It is often useful to replace the reference arm by a second active fiber, and to employ appropriate electrical driving in order to increase the refractive index of one fiber while simultaneously decreasing the refractive index of the other. In such a manner, it is possible to double the effect of the electrical driving signal. This is typically called a push-pull configuration of a Mach-Zehnder fiber interferometer, such configuration being known per se to those of ordinary skill in the relevant art. The main disadvantages of such set-up are the need for two couplers, the need for matching the length of the two arms with high precision (within a few microns), and the instabilities associated with varying temperatures and environmental conditions at each arm of the fiber interferometer.

An advantageous configuration that may be implemented therefore involves the use of a twin-core fiber, as schematically shown in figure 5, wherein the two cores 14, 26 of the fiber are in close proximity to each other, such that the evanescent field of the light in one core penetrates into the second core whereby coupling of light between the cores may occur. Through poling and subsequent application of voltage, it is possible to adjust the amount of light coupled between the cores. If the optical intensity exiting one of the cores is measured, the application of voltage may determine the amount of light that exits that core from the end of the fiber. Thus, a single-fiber modulator may be implemented without the need for two couplers, with automatic matching of interferometer arm lengths, and with greatly improved temperature stability. The technique disclosed herein of poling a dielectric material, such as an optical fiber, using two electrodes 15, 16 of the same polarity (two anodes) may be suitably employed for an arrangement incorporating a twin-core fiber. The two holes 12, 13 for accommodating the electrodes should preferably be aligned along the same line as the two cores 14, 26, so that the two cores are surrounded by the two holes along a single line. The fiber may advantageously be designed such that the charge distribution recorded by the poling process is located between the two cores, as indicated by the two affected regions 19, 20 in figure 5. For example, this may be achieved by creating a symmetrical structure, having equal spacing between the center of the fiber and the two cores, as well as between the center of the fiber and the two holes. If the charge distribution is created in this manner, the electric field direction experienced by the two cores is opposite from each other, leading to the most favorable condition for the push-pull operation of the interferometric device.

An interferometer, such as a Mach-Zehnder interferometer, is suitably used for performing amplitude switching of the output from a poled fiber. Generally, it is desirous to obtain maximum contrast for this amplitude switching, and to this end the polarization state of light coming from the active and reference arms and subsequently recombining to provide the output should be parallel to each other. However, in some applications, it may be useful to have the polarization state of light from the respective interferometer arms combining with mutually perpendicular polarization states. In such case, and for a given input polarization state, the amplitude of the signal after recombination may typically not be varied by the application of a control voltage. Rather, the effect of an applied voltage across the poled fiber in the interferometer will be a polarization rotation. Because of the high efficiency of the inventive poling method disclosed herein, it is advantageous to employ this inventive poling method when it is desired to control the polarization state of light in a poled fiber interferometer.

In some applications, after the poling process has been concluded, the electrodes used during poling are no longer required. This may, for example, be the case when the poled fiber is used for wavelength conversion or any other application where the poled fiber acts as a passive component. The electrodes may then constitute a loss element for the optical signal propagating in the fiber, and may advantageously be removed from the device. Removal of the electrodes may be effected, for example, by selectively etching the glass fiber near one end in order to expose the metal electrode inside the or each hole of the fiber (the electrodes may be of an alloy filling the entire hole, or a metal wire located within the hole), and then physically pulling out the electrode from the hole. In case a conductive film electrode is employed, the electrode may be removed by a chemical attack inside the hole. For poled fibers, it is typically desired to inscribe a permanent electric field across the core having the highest possible field strength, such that the second order nonlinearity created becomes as large as possible. The primary source of the inscribed field is the presence of trapped negative charges, primarily at the edge of the depletion region, which attract positive charges from both electrodes to cancel the field in the electrode material (typically made from metal). The same is valid also when the electrode material has been removed from the holes, since positive charges are attracted from the air in the holes. In the absence of an external voltage supply, the field inside the fiber will be directed from one electrode (or hole) into the negative charge distribution, and from the other electrode (or hole) into the negative charge distribution. Therefore, along the trajectory from one hole to the other, the field reverses sign. The value of the integral of the field in going from one hole to the other is null, i.e. ∫E·dl=0, irrespective of the position of the negative charge distribution. If one of the holes is located much closer to the negative charges than the other hole, then the field between this hole and the negative charges is very strong, while the field between the negative charges and the other hole is much weaker, so that the total integral according to above is still null. If, after poling, the distance from one of the holes to the negative charges were to be reduced by half through, for example, etching without removal of the negative charges, then the field in the remaining region between the hole and the negative charge distribution would double, so that the value of the above integral remained zeroed. If the core of the fiber were situated in this remaining region between the hole and the negative charge distribution, it could be possible to double the field experienced by the core by performing a simple etching procedure. This is particularly attractive when the electrodes are removed. Etching may be carried out by flowing a solution of hydrofluoric acid through the hole, so that the diameter of the hole expands. The separation between the negative charges and the hole may be adjusted à posteriori by etching, and the field in the remaining un-etched region (preferably containing the core of the fiber) may be increased significantly.

Another approach for increasing the induced nonlinearity may be to control the presence of OH radicals in the glass during poling. The presence of OH radicals may increase both the second order nonlinearity induced by the poling and also the third order nonlinearity.

Consequently, experiments were carried out in which the holes of the fiber to be poled were filled with water, and the ends of the fiber were spliced to enclose the liquid within the holes. The fiber was then heated to a high temperature of about 200°C for approximately one hour, thus promoting the diffusion of water radicals into the glass. It should be noted in this context that the enclosure of the water by splicing the ends of the fiber prevented water vapor from escaping the fiber from the ends thereof. Following this high temperature water treatment, the water was removed from the holes, electrodes were inserted and the fiber was poled. When the fiber was tested after poling, it was found that the third order nonlinearity in such water treated fiber was significantly larger compared to a fiber which had not been water treated in this manner. In fact, the third order nonlinearity had increased by up to 70%. A great advantage may thus be obtained by water treating the fibers prior to poling, or alternatively pulling fibers from a preform doped to a relatively high water content. Any possible optical loss caused by the OH radicals may be obviated by using heavy water (D₂O) rather than normal water (H₂O).

Finally, it has been observed that components poled by the inventive method have an unmatched stability in terms of the recorded field. For devices poled according to the conventional technique, decay times in the order of weeks or months have been reported. However, devices poled according to the method disclosed herein have shown to be stable for over a year without any sign of degradation in performance. One explanation for this extraordinary stability could be that by using two anodes for the poling, substantially all highly mobile ions are removed from the region neighboring the core. Unlike devices obtained by the conventional method, wherein there is an unaffected sodium-rich region just in the vicinity of the negative charges (typically between the core and the cathode electrode), the inventive method removes mobile ions from both sides of the core. It is possible that the removed ions are replaced by H₃O⁺ radicals, which are much more difficult to move.

Although the exemplifying description above is mainly related to the poling of optical silica fibers, it is to be understood that other types of waveguides, and also non-waveguiding dielectric materials, may be subjected to the inventive method. In addition, photonic crystal fibers (PCF:s) may be poled using the method.

### Conclusion

A method of inducing a permanent electric field in a dielectric material is disclosed, generally known as "poling" of the material. Two electrodes are used for poling the material, and potentials of the same polarity compared to a surrounding ground potential are applied to the electrodes in order to effect the poling. Preferably, the applied potentials are of substantially equal magnitude.

## Claims

1. A method of inducing a permanent electric field in a region of a dielectric material (14) in which charge carriers or dipoles can be rearranged by the influence of an applied electric field, comprising providing at least a first and a second electrode (15, 16, 21, 22, 23, 24) adjacent to said material, **characterized in that** potentials of the same polarity compared to a ground potential defined by an environment outside the material (14) are applied to all electrodes (15, 16, 21, 22, 23, 24) adjacent to said material.

2. The method according to claim 1, wherein the potentials are positive compared to said ground potential.

3. The method according to claim 2, wherein the potentials are substantially equal in magnitude.

4. The method according to anyone of the preceding claims, wherein the material (14) is at an elevated temperature when the potentials are applied.

5. The method according to claim 4, wherein the elevated temperature of the material (14) is at least 200 degrees centigrade, preferably at least 250 degrees centigrade.

6. The method according to claim 4 or 5, wherein the material (14) is heated by placing the same in a metallic or soda-lime based furnace.

7. The method according to anyone of the preceding claims, wherein the material (14) is subjected to UV radiation at the time when the potentials are applied.

8. The method according to anyone of the preceding claims, wherein the material (14) is an amorphous, glassy material.

9. The method according to anyone of the preceding claims, wherein the material (14) subjected to the method constitutes a waveguide, such as an optical fiber (10).

10. The method according to anyone of the preceding claims, wherein the dielectric material (14) is provided on a heated base plate (17), preferably made of soda-lime glass or metal.

11. The method according to anyone of the preceding claims, wherein the electrodes (15, 16, 21, 22, 23, 24) are located in an optical fiber in order to induce a permanent electric field in a core (14) and/or a cladding (18) of said optical fiber (10).

12. The method according to claim 11, wherein the diameter of the fiber (10) is a few times larger than the separation between the electrodes (15, 16, 21, 22, 23, 24), preferably 4-10 times larger, most preferably about 6 times larger.

13. The method according to claim 11 or 12, wherein the electrodes (15, 16, 21, 22, 23, 24) are arranged inside the cladding (18) of the fiber (10) substantially parallel to the core (14) thereof.

14. The method according to anyone of claims 11 to 13, wherein the electrodes (15, 16, 21, 22, 23, 24) are located in the fiber (10) such that the core (14) is closer to one of the electrodes.

15. The method according to anyone of claims 11 to 14, wherein the fiber (10) is a photonic crystal fiber.

16. The method according to anyone of the claims 11 to 15, wherein the fiber (10) is provided with two cores.

17. The method according to anyone of the preceding claims, wherein the material is post-processed, after the permanent electric field has been induced, in a step in which the etectrodes (15, 16, 21, 22, 23, 24) are removed.

18. The method according to claim 17, wherein the material is further post-processed in a subsequent step in which one or more holes that accommodated the electrodes are etched.

19. The method according to anyone of the preceding claims, wherein the material is pre-processed, before the potentials are applied, in a step in which it is subjected to H₂ or water at high temperature.

20. The method according to anyone of the preceding claims, wherein the permanent electric field is induced in a birefringent optical fiber.

## Patentansprüche

1. Verfahren zum Induzieren eines permanenten elektrischen Feldes in einem Bereich eines dielektrischen Materials (14), in welchem Ladungsträger oder Dipole durch den Einfluss eines angelegten elektrischen Feldes umgeordnet werden können, wobei das Verfahren das Bereitstellen mindestens einer ersten und einer zweiten Elektrode (15, 16, 21, 22, 23, 24) umfasst, die dem Material benachbart sind, **dadurch gekennzeichnet, dass** Potentiale derselben Polarität, verglichen mit einem durch eine Umgebung außerhalb des Materials (14) definierten Massepotential, an alle Elektroden (15, 16, 21, 22, 23, 24) angelegt werden, die dem Material benachbart sind.

2. Verfahren nach Anspruch 1, wobei die Potentiale positiv sind, verglichen mit dem Massepotential.

3. Verfahren nach Anspruch 2, wobei die Potentiale im Wesentlichen gleich groß sind.

4. Verfahren nach einem der vorhergehenden Ansprüche, wobei das Material (14) eine erhöhte Temperatur aufweist, wenn die Potentiale angelegt werden.

5. Verfahren nach Anspruch 4, wobei die erhöhte Temperatur des Materials (14) mindestens 200 Grad Celsius, vorzugsweise mindestens 250 Grad Celsius beträgt.

6. Verfahren nach Anspruch 4 oder 5, wobei das Material (14) erwärmt wird, indem dasselbe in einem metallischen oder auf Kalk-Natron basierenden Ofen angeordnet wird.

7. Verfahren nach einem der vorhergehenden Ansprüche, wobei das Material (14) zu der Zeit, wenn die Potentiale angelegt werden, einer UV-Strahlung ausgesetzt wird.

8. Verfahren nach einem der vorhergehenden Ansprüche, wobei das Material (14) ein amorphes, glasartiges Material ist.

9. Verfahren nach einem der vorhergehenden Ansprüche, wobei das Material (14), das dem Verfahren unterzogen wird, einen Wellenleiter bildet, wie etwa eine optische Faser (10).

10. Verfahren nach einem der vorhergehenden Ansprüche, wobei das dielektrische Material (14) auf einer erwärmten Grundplatte (17) bereitgestellt wird, die vorzugsweise aus Kalk-Natron-Glas oder Metall hergestellt ist.

11. Verfahren nach einem der vorhergehenden Ansprüche, wobei die Elektroden (15, 16, 21, 22, 23, 24) in einer optischen Faser angeordnet werden, um ein permanentes elektrisches Feld in einem Kern (14) und/oder einer Umhüllung (18) der optischen Faser (10) zu induzieren.

12. Verfahren nach Anspruch 11, wobei der Durchmesser der Faser (10) einige Male größer als der Abstand zwischen den Elektroden (15, 16, 21, 22, 23, 24) ist, vorzugsweise 4-10 mal größer, am meisten bevorzugt etwa 6 mal größer.

13. Verfahren nach Anspruch 11 oder 12, wobei die Elektroden (15, 16, 21, 22, 23, 24) innerhalb der Umhüllung (18) der Faser (10) im Wesentlichen parallel zu dem Kern (14) derselben angeordnet sind.

14. Verfahren nach einem der Ansprüche 11 bis 13, wobei die Elektroden (15, 16, 21, 22, 23, 24) in der Faser (10) derart angeordnet sind, dass sich der Kern (14) näher bei einer der Elektroden befindet.

15. Verfahren nach einem der Ansprüche 11 bis 14, wobei die Faser (10) eine photonische Kristallfaser ist.

16. Verfahren nach einem der Ansprüche 11 bis 15, wobei die Faser (10) mit zwei Kernen versehen ist.

17. Verfahren nach einem der vorhergehenden Ansprüche, wobei das Material, nachdem das permanente elektrische Feld induziert worden ist, in einem Schritt nachbearbeitet wird, in welchem die Elektroden (15, 16, 21, 22, 23, 24) entfernt werden.

18. Verfahren nach Anspruch 17, wobei das Material ferner in einem nachfolgenden Schritt nachbearbeitet wird, in welchem ein oder mehrere Löcher, welche die Elektroden aufgenommen hatten, geätzt werden.

19. Verfahren nach einem der vorhergehenden Ansprüche, wobei das Material, bevor die Potentiale angelegt werden, in einem Schritt vorbehandelt wird, in welchem es H₂ oder Wasser mit hoher Temperatur ausgesetzt wird.

20. Verfahren nach einem der vorhergehenden Ansprüche, wobei das permanente elektrische Feld in einer doppelbrechenden optischen Faser induziert wird.

## Revendications

1. Procédé d'induction d'un champ électrique permanent dans une région d'un matériau diélectrique (14) dans laquelle des porteurs de charges ou des dipôles peuvent être réorganisés sous l'influence d'un champ électrique appliqué, comprenant la fourniture d'au moins une première électrode et une deuxième électrode (15, 16, 21, 22, 23, 24) adjacentes au dit matériau, **caractérisé en ce que** des potentiels de la même polarité par rapport à un potentiel de masse défini par un environnement à l'extérieur du matériau (14) sont appliqués à toutes les électrodes (15, 16, 21, 22, 23, 24) adjacentes au dit matériau.

2. Procédé selon la revendication 1, dans lequel les potentiels sont positifs par rapport au dit potentiel de masse.

3. Procédé selon la revendication 2, dans lequel les potentiels sont de grandeur sensiblement égale.

4. Procédé selon l'une quelconque des revendications précédentes, dans lequel le matériau (14) est à une température élevée lorsque les potentiels sont appliqués.

5. Procédé selon la revendication 4, dans lequel la température élevée du matériau (14) est au moins 200 degrés centigrades, de préférence au moins 250 degrés centigrades.

6. Procédé selon la revendication 4 ou 5, dans lequel le matériau (14) est chauffé en le plaçant dans un four métallique ou à base de chaux sodée.

7. Procédé selon l'une quelconque des revendications précédentes, dans lequel le matériau (14) est soumis à un rayonnement ultraviolet lorsque les potentiels sont appliqués.

8. Procédé selon l'une quelconque des revendications précédentes, dans lequel le matériau (14) est un matériau vitreux amorphe.

9. Procédé selon l'une quelconque des revendications précédentes, dans lequel le matériau (14) soumis au procédé constitue un guide d'onde, comme une fibre optique (10).

10. Procédé selon l'une quelconque des revendications précédentes, dans lequel le matériau diélectrique (14) est fourni sur une plaque de base chauffée (17), de préférence constituée de verre de chaux sodée ou de métal.

11. Procédé selon l'une quelconque des revendications précédentes, dans lequel les électrodes (15, 16, 21, 22, 23, 24) sont situées dans une fibre optique afin d'induire un champ électrique permanent dans un coeur (14) et/ou un revêtement (18) de ladite fibre optique (10).

12. Procédé selon la revendication 11, dans lequel le diamètre de la fibre (10) est quelques fois plus grand que la séparation entre les électrodes (15, 16, 21, 22, 23, 24), de préférence 4 à 10 fois plus grand, avec le plus de préférence environ 6 fois plus grand.

13. Procédé selon la revendication 11 ou 12, dans lequel les électrodes (15, 16, 21, 22, 23, 24) sont agencées à l'intérieur du revêtement (18) de la fibre (10) sensiblement parallèlement au coeur (14) de celle-ci.

14. Procédé selon l'une quelconque des revendications 11 à 13, dans lequel les électrodes (15, 16, 21, 22, 23, 24) sont situées dans la fibre (10) de sorte que le coeur (14) soit plus près de l'une des électrodes.

15. Procédé selon l'une quelconque des revendications 11 à 14, dans lequel la fibre (10) est une fibre de cristal photonique.

16. Procédé selon l'une quelconque des revendications 11 à 15, dans lequel la fibre (10) est pourvue de deux coeurs.

17. Procédé selon l'une quelconque des revendications précédentes, dans lequel le matériau subit un post-traitement, après l'induction du champ électrique permanent, à une étape à laquelle les électrodes (15, 16, 21, 22, 23, 24) sont enlevées.

18. Procédé selon la revendication 17, dans lequel le matériau subit en outre un post-traitement à une étape suivante à laquelle un ou plusieurs trous ayant reçu les électrodes sont mordancés.

19. Procédé selon l'une quelconque des revendications précédentes, dans lequel le matériau subit un pré-traitement, avant l'application des potentiels, à une étape à laquelle il est soumis à du H₂ ou à de l'eau à haute température.

20. Procédé selon l'une quelconque des revendications précédentes, dans lequel le champ électrique permanent est induit dans une fibre optique biréfringente.
